# EUROPÄISCHE PATENTANMELDUNG

(11) **EP 2 037 129 A1**
(43) Veröffentlichungstag der Anmeldung: **18.03.2009**
(21) Anmeldenummer: 07018149.0
(22) Anmeldetag: 14.09.2007
(51) Int. Cl.: F16B 13/06, F16B 13/12

(54) **Langschaftdübel**

(71) Anmelder: Allfa Dübel GmbH, 45899 Gelsenkirchen (DE)
(72) Erfinder: Horst, Tkocz, 45899 Gelsenkirchen (DE)
(74) Vertreter: Rohmann, Michael

(57) **Zusammenfassung**

Langschaftdübel mit einem Basiskörper (2), der einen Schaftabschnitt (5) und einen Spreizabschnitt (6) aufweist. Der Spreizabschnitt (6) weist mehr als zwei über den Dübelumfang verteilte Spreizzonen (7,8) auf. Es ist ein im Zuge der Montage des Dübels (1) nicht aufspreizender Dübelfuß (4) vorgesehen.

## Beschreibung

Die Erfindung betrifft einen Langschaftdübel mit einem Basiskörper, der einen Schaftabschnitt und einen Spreizabschnitt aufweist. Derartige Langschafldübel werden auch als Rahmendübel bezeichnet. Sie zeichnen sich durch einen verhältnismäßig langen Schaft zwischen Dübelkopf und Spreizabschnitt aus. Der Langschaftdübel weist in üblicher Weise einen inneren mittigen Hohlraum auf, in den im Zuge der Montage ein Befestigungselement, insbesondere eine Schraube eingebracht wird. Montage meint hier und nachfolgend, dass der Langschaftdübel in eine Bohrung in einem Baustoff eingesetzt wird und dass in den Dübel bzw. in den mittigen Hohlraum des Dübels ein Befestigungselement, insbesondere eine Schraube eingebracht wird. - Der erfindungsgemäße Langschaftdübel wird nachfolgend auch kurz als Dübel bezeichnet.

Langschaftdübel der eingangs beschriebenen Art sind aus der Praxis grundsätzlich bekannt. Diese bekannten Langschaftdübel weisen aber den Nachteil auf, dass sie in manchen Baustoffen einen zu geringen Halt bieten uns sich somit bezüglich dieser Baustoffe durch eine zu geringe Auszugskraft auszeichnen. Es ist auch bekannt die Dübel je nach Verwendung bzw. je nach Baustoff individuell bzw. speziell auszugestalten. Das macht eine relativ aufwändige Fertigung und Lagerung erforderlich. Die bislang bekannten Langschaftdübel lassen insbesondere bei einer Verwendung bzw. Montage in Hohlbaustoffen im Hinblick auf ihren Halt und ihre Auszugskraft zu wünschen übrig.

Demgegenüber liegt der Erfindung das technische Problem zugrunde, einen Langschaftdübel der eingangs genannten Art anzugeben, der in unterschiedlichen Baustoffen, insbesondere auch in Hohlbaustoffen einen optimalen Halt gewährleistet und der sich im montierten Zustand durch eine hohe Auszugskraft auszeichnet.

Zur Lösung dieses technischen Problemes lehrt die Erfindung einen Langschaftdübel mit einem Basiskörper, der einen Schaftabschnitt und einen Spreizabschnitt aufweist, wobei der Spreizabschnitt mehr als zwei über den Dübelumfang verteilte Spreizzonen bzw. Spreizelemente aufweist und wobei ein im Zuge der Montage des Dübels nicht aufspreizender Dübelfuß vorgesehen ist. Der erfindungsgemäße Dübel weist einen sich in axialer Richtung des Dübels erstreckenden mittigen Hohlraum zur Aufnahme eines Befestigungselementes, insbesondere zur Aufnahme einer Schraube auf. Dass der Dübelfuß des erfindungsgemäßen Dübels im Zuge der Montage des Dübels nicht aufspreizt meint insbesondere, dass der Dübelfuß spreizzonenfrei bzw. spreizelementfrei ausgestaltet ist und dass der Dübelfuß insbesondere keine beim Einbringen eines Befestigungselementes seitlich abspreizenden Rippen oder Schenkel aufweist. Zweckmäßigerweise verformt sich die über den Umfang des Dübels umlaufende Wandung des Dübelfußes beim Einbringen eines Befestigungselementes über den gesamten Umfang radial nach außen und zwar rotationssymmetrisch bzw. im Wesentlichen rotationssymmetrisch bezüglich der Längsmittelachse des Dübels.

Nach sehr bevorzugter Ausführungsform der Erfindung besteht der erfindungsgemäße Langschaftdübel aus Kunststoff. Vorzugsweise ist der erfindungsgemäße Dübel einstückig aus Kunststoff hergestellt. Zweckmäßigerweise ist insbesondere der Dübelfuß einstückig an den Basiskörper bzw. an den Spreizabschnitt des Basiskörpers angeformt.

Es liegt im Rahmen der Erfindung, dass die Länge des Schaftabschnittes mindestens 30%, vorzugsweise mindestens 35% und bevorzugt mindestens 40% der Länge des Basiskörpers beträgt, Gemäß empfohlener Ausführungsvariante beträgt die Länge des Schaftabschnittes mindestens 45% der Länge des Basiskörpers. Es liegt fernerhin im Rahmen der Erfindung, dass die restliche Länge des Basiskörpers von dem Spreizabschnitt eingenommen wird.

Zweckmäßigerweise besteht der Basiskörper ausschließlich aus dem Spreizabschnitt und dem Schaftabschnitt und somit schließt der Schaftabschnitt unmittelbar an den Spreizabschnitt an. Gemäß bevorzugter Ausführungsform ist der Schaftabschnitt geschlossen bzw. im Wesentlichen geschlossen ausgestaltet. Geschlossene Ausgestaltung meint hier, dass in dem Schaftabschnitt insbesondere keine in Längsrichtung des Dübels verlaufende Schlitze vorgesehen sind. Empfohlenermaßen ist die Außenoberfläche des Schaftabschnittes nicht profiliert bzw. im Wesentlichen nicht profiliert und vorzugsweise glatt bzw. im Wesentlichen glatt ausgebildet. Zweckmäßigerweise schließt an den Schaftabschnitt ein Dübelkopf an, der bevorzugt flanschförmig ausgebildet ist.

Die in dem Spreizabschnitt angeordneten Spreizzonen bzw. Spreizelemente erstrecken sich in Längsrichtung des Dübels bzw. in Längsrichtung des Spreizabschnitts. Zweckmäßigerweise sind die Spreizzonen bzw. Spreizelemente durch in Längsrichtung des Dübels verlaufende Schlitze voneinander getrennt. Nach bevorzugter Ausführungsform der Erfindung weist der Spreizabschnitt mindestens drei Spreizzonen bzw. Spreizelemente auf. Gemäß sehr bevorzugter Ausführungsform der Erfindung ist der Spreizabschnitt mit mindestens vier Spreizzonen ausgestattet, die vorzugsweise durch in Längsrichtung des Dübels verlaufende Schlitze voneinander getrennt sind. Ganz besonders bewährt hat sich eine Ausführungsform mit vier Spreizzonen bzw. vier Spreizelementen, die über den Umfang des Dübels verteilt angeordnet sind. Nach empfohlener Ausführungsvariante der Erfindung sind zwei erste gegenüberliegende Spreizzonen gleicher axialer Länge und gleicher Breite b sowie zwei zweite gegenüberliegende Spreizzonen gleicher axialer Länge und gleicher Breite b vorhanden. Axiale Länge bezieht sich hier auf die Längsrichtung des Dübels, Die Breite b betrifft die Ausdehnung der Spreizzone bzw. des Spreizelementes in Umfangsrichtung des Dübels. Eine bevorzugte Ausführungsform der Erfindung ist dadurch gekennzeichnet, dass die beiden ersten gegenüberliegenden Spreizzonen eine geringere Breite b als die beiden zweiten gegenüberliegenden Spreizzonen aufweisen. Dabei beträgt die Breite b der ersten gegenüberliegenden Spreizzonen zweckmäßigerweise weniger als 60%, vorzugsweise weniger als 50% der Breite b der beiden zweiten gegenüberliegendes Spreizzonen. - Es wurde oben dargelegt, dass die Spreizzonen bzw. Spreizelemente empfohlenermaßen durch Schlitze voneinander getrennt sind. Die Schlitze können dabei mit dem für das Befestigungselement vorgesehenen mittigen inneren Hohlraum des Dübels in Verbindung stehen. Die Schlitze können aber auch zumindest bereichsweise durch Wandungsabschnitte bzw. Wandungen von dem Hohlraum getrennt sein, die dann beim Einbringen des Befestigungselementes und beim Abspreizen Sollbruchstellen bilden können,

Gemäß bevorzugter Ausführungsform der Erfindung weisen zumindest zwei gegenüberliegende Spreizzonen jeweils eine Mehrzahl von Profilierungen auf, die in Längsrichtung der Spreizzonen verteilt angeordnet sind. Zweckmäßigerweise sind die Profilierungen über den größten Teil der Länge der Spreizzonen verteilt angeordnet. Es liegt im Rahmen der Erfindung, dass die Profilierungen einer Spreizzone mit gleichen Abständen zueinander angeordnet sind und dass diese Profilierungen vorzugsweise die gleiche Form bzw. im Wesentlichen die gleiche Form aufweisen. Gemäß einer bevorzugten Ausführungsvariante der Erfindung weisen sowohl die beiden ersten gegenüberliegenden Spreizzonen als auch die beiden zweiten gegenüberliegenden Spreizzonen jeweils eine Mehrzahl von Profilierungen auf, die jeweils in Längsrichtung der Spreizzonen verteilt angeordnet sind.

Es liegt im Rahmen der Erfindung, dass sich die Profilierungen einer Spreizzone über zumindest 40%, vorzugsweise über zumindest 50% und sehr bevorzugt über zumindest 60% der Breite b einer Spreizzone erstrecken. Nach besonders bevorzugter Ausführungsform der Erfindung weisen zwei schmalere gegenüberliegende Spreizzonen bzw. Spreizelemente jeweils Profilierungselemente auf, die sich über die gesamte Breite b dieser Spreizzonen erstrecken. Diese schmaleren gegenüberliegenden Spreizzonen weisen eine geringere Breite b als die beiden anderen gegenüberliegenden Spreizzonen auf. Zweckmäßigerweise sind die Profilierungselemente der schmaleren Spreizzonen als Haltezähne ausgebildet. Vorzugsweise sind zumindest 3 vorzugsweise zumindest vier Profilierungselemente über die Länge einer Spreizzone verteilt angeordnet.

Eine sehr bevorzugte Ausführungsform der Erfindung ist dadurch gekennzeichnet, dass zwei Spreizzonen bzw. Spreizelemente, insbesondere die beiden schmaleren gegenüberliegenden Spreizzonen bzw. Spreizelemente im Zuge der Montage leichter bzw. stärker abspreizbar sind als die beiden anderen gegenüberliegenden Spreizzonen. Wenn also ein Befestigungselement, insbesondere eine Schraube in den erfindungsgemäßen Dübel eingebracht wird, können zwei gegenüberliegende Spreizzonen bzw. Spreizelemente stärker abspreizen als die beiden anderen gegenüberliegenden Spreizzonen / Spreizelemente. Die beiden leichter / stärker abspreizbaren Spreizzonen sind in Bezug auf den übrigen Basiskörper zweckmäßigerweise flexibler ausgestaltet als die beiden weiteren gegenüberliegenden Spreizzonen.

Es liegt im Rahmen der Erfindung, dass die axiale Länge des Dübelfußes weniger als 20%, vorzugsweise weniger als 15%, bevorzugt weniger als 12% und sehr bevorzugt weniger als 10% der Länge des Basiskörpers beträgt. Der Begriff axiale Länge bezieht sich auf die Dübellängsrichtung. Nach einer bevorzugten Ausführungsform der Erfindung beträgt die axiale Länge des Dübelfußes weniger als 8% der Länge des Basiskörpers. Gemäß empfohlener Ausführungsvariante beträgt die axiale Länge des Dübelfußes weniger als 40%, vorzugsweise weniger als 35%, bevorzugt weniger als 30% sehr bevorzugt weniger als 25% und besonders bevorzugt weniger als 20% der axialen Länge des Spreizabschnittes. Axiale Länge des Spreizabschnittes meint hier insbesondere die Länge der längsten die Spreizzonen trennenden Schlitze bzw. Längsschlitze,

Es liegt im Rahmen der Erfindung, dass der Dübelfuß ringförmig über den Dübelumfang bzw. um den inneren mittigen Hohlraum des Dübels umläuft. Es liegt fernerhin im Rahmen der Erfindung, dass der Dübelfuß keine sich in Längsrichtung des Dübelfußes erstreckenden Schlitze bzw. Spreizschlitze aufweist. Längsrichtung des Dübelfußes bezieht sich hier auf die Längsrichtung des Dübels. Vorzugsweise ist der Dübelfuß mit zumindest einem Dehnungselement ausgestattet, das eine radiale Dehnung des Dübelfußes im Zuge der Montage ermöglicht bzw. erleichtert. Radiale Dehnung meint hier eine radiale Aufweitung des Dübelfußes, die beim Einbringen eines Befestigungselementes, insbesondere einer Schraube stattfindet. Empfohlenermaßen wird der Dübelfuß dabei gleichmäßig in alle Richtungen bzw. im Wesentlichen gleichmäßig in alle Richtungen radial aufgeweitet. Vorzugsweise weist der Dübelfuß zumindest eine radiale Öffnung bzw, Bohrung als Dehnungselement auf. Die Öffnung bzw, Bohrung steht zweckmäßigerweise in Verbindung mit dem inneren mittigen Hohlraum des Dübels, der für das Befestigungselement bzw. für die Schraube vorgesehen ist. Eine besonders bevorzugte Ausführungsform der Erfindung ist dadurch gekennzeichnet, dass der Dübelfuß zwei gegenüberliegende radiale Öffnungen bzw. Bohrungen als Dehnungselemente aufweist, wobei diese Öffnungen/Bohrungen empfohlenermaßen miteinander fluchten. Der Durchmesser einer solchen Öffnung/Bohrung beträgt zweckmäßigerweise weniger als 50% der Länge des Dübelfußes.

Nach einer bevorzugten Ausführungsvariante weist der Dübelfuß an seiner Unterseite bzw. an seiner dem Spreizabschnitt abgewandten Unterseite eine Öffnung auf, die vorzugsweise mit dem inneren mittigen Hohlraum für das Befestigungselement in Verbindung steht. Die unterseitige Öffnung des Dübelfußes ist zweckmäßigerweise schlitzförmig ausgebildet und hat empfohlenermaßen die Form einer Hantel. Eine hantelförmige unterseitige Öffnung des Dübelfußes hat sich im Hinblick auf eine funktionssichere Dehnung des Dübelfußes bei der Montage besonders bewährt. Insbesondere kann damit auch effektiv eine Spreizung bzw. ein Auseinanderreißen des Dübelfußes vermieden werden.

Es liegt im Rahmen der Erfindung, dass der Dübelfuß (auch) im montierten Zustand ringförmig über den Dübelumfang umläuft und ein eingebrachtes Befestigungselement, insbesondere eine eingebrachte Schraube ringförmig umgibt. Montierter Zustand meint den Zustand mit bereits eingebrachtem Befestigungselement bzw. mit bereits eingebrachter Schraube. Es liegt fernerhin im Rahmen der Erfindung, dass der Dübelfuß keine Spreizfunktion erfüllt und auch im montiertem Zustand seine Form bzw. Ringform beibehält bzw. im Wesentlichen beibehält, wobei der Dübelfuß vorzugsweise gegenüber seinem ursprünglichen Zustand radial aufgeweitet bzw. gedehnt ist.

Der Erfindung liegt die Erkenntnis zugrunde, dass der erfindungsgemäße Langschaftdübel in den verschiedensten Baustoffen funktionssicher eingesetzt werden kann und sich dort durch einen effektiven Halt und eine überraschend hohe Auszugskraft auszeichnet. Der erfindungsgemäße Langschaftdübel weist diese vorteilhaften Eigenschaften im montiertem Zustand beispielsweise sowohl in gerissenem als auch ungerissenem Beton auf sowie in weichem Beton (Porenbeton). Hervorzuheben ist, dass sich der erfindungsgemäße Dübel insbesondere auch für Hohlbaustoffe, beispielsweise Hohlziegel eignet. Der Erfindung liegt die Erkenntnis zugrunde, dass der Langschaftdübel sich bei der Montage in den verschiedenen Baustoffen unterschiedlich verhält. Der Dübel erkennt gleichsam den Baustoff und passt insbesondere die Verformung seiner Spreizzonen an die Art des Baustoffes an. In festen Baustoffen wie Beton und in weichen Baustoffen wie Porenbeton findet in Abhängigkeit von dem Baustoff eine mehr oder weniger ausgeprägte Spreizung der Spreizzonen bzw. Spreizelemente statt. In Hohlbaustoffen, beispielsweise Hohlziegeln findet aufgrund der erfindungsgemäßen Ausbildung des Dübels eine Verknotung der Spreizzonen bzw. Spreizelemente statt, die zu einem effektiven Halt auch in dem Hohlbaustoff führt. Zu betonen ist auch, dass der erfindungsgemäße Dübel verhältnismäßig einfach und kostengünstig herstellbar ist und nichtsdestoweniger die oben beschriebenen beachtlichen Vorteile aufweist.

Nachfolgend wird die Erfindung anhand einer lediglich ein Ausführungsbeispiel darstellenden Zeichnung näher erläutert, Es zeigen in schematischer Darstellung:

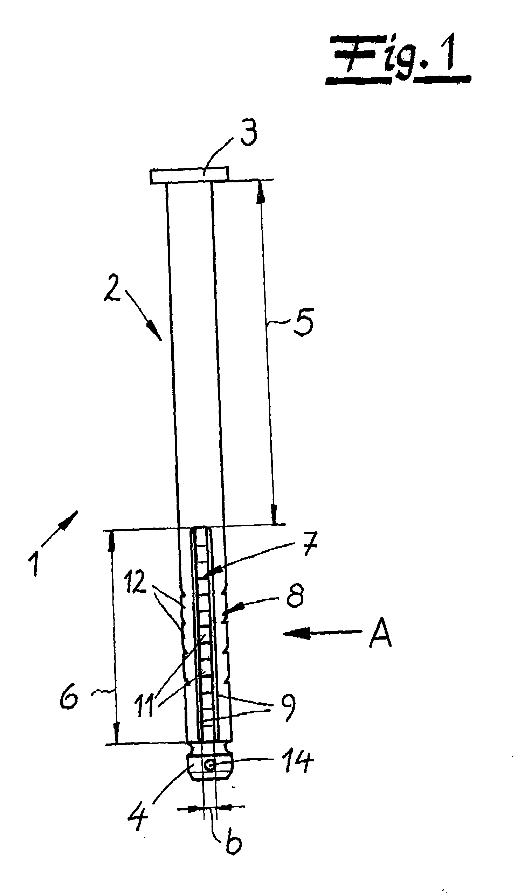

- Fig. 1: eine Seitenansicht eines erfindungsgemäßen Langschaftdübels,
- Fig. 2: den Gegenstand nach Fig. 1 aus Richtung des Pfeiles A,
- Fig.3: den Gegenstand gemäß Fig. 1 im montierten Zustand mit eingebrachter Schraube in einem ersten Baustoff,
- Fig. 4: den Gegenstand nach Fig. 2 im montierten Zustand mit eingebrachter Schraube in einem zweiten Baustoff,
- Fig, 5: den Gegenstand nach Fig. 1 im montierten Zustand mit eingebrachter Schraube in einem dritten Baustoff,
- Fig. 6: einen Schnitt durch den Spreizabschnitt des erfindungsgemäßen Langschaftdübels im noch nicht montierten Zustand (links) und im montierten Zustand (rechts),
- Fig.7: eine Seitenansicht des Befestigungsfußes eines erfindungsgemäßen Langschafldübels im noch nicht montierten Zustand (links) und im montierten Zustand (rechts) und
- Fig. 8: eine Unteransicht des Gegenstandes nach Fig. 7 im noch nicht montierten Zustand (links) und im montierten Zustand (rechts).

Die Figuren zeigen einen erfindungsgemäßen Langschafldübel 1 mit einem Basiskörper 2, einem an einem Ende des Basiskörpers 2 angeschlossenen Dübelkopf 3 und einem an dem anderen Ende des Basiskörpers 2 angeschlossenen Dübelfuß 4. Der Basiskörper 2 besteht aus einem Schaftabschnitt 5 und einem Spreizabschnitt 6. Vorzugsweise besteht der Langschaftdübel 1 einstückig aus Kunststoff. Die Länge des Schaftabschnittes 5 beträgt nach einer bevorzugten Ausführungsform und im Ausführungsbeispiel mehr als 50 % der Länge des Basiskörpers 2. Der Schaftabschnitt 5 ist zweckmäßigerweise und im Ausführungsbeispiel schlitzfrei ausgebildet und weist vorzugsweise auch ansonsten keine seitlichen Öffnungen auf. Fernerhin ist der Schaftabschnitt 5 bevorzugt an seiner Außenoberfläche unprofiliert bzw, im Wesentlichen unprofiliert ausgebildet. Der Schaftabschnitt 5 weist zweckmäßigerweise eine glatte bzw. im Wesentlichen glatte Oberfläche auf. - Durch den Dübelkopf 3, den Basiskörper 2 und durch den Dübelfluß 4 erstreckt sich im Übrigen in Längsrichtung des Dübels 1 in üblicher Weise ein innerer mittiger Hohlraum für die Aufnahme eines Befestigungselementes, insbesondere zur Aufnahme einer Schraube 10.

Der Spreizabschnitt 6 weist nach sehr bevorzugter Ausführungsform und im Ausführungsbeispiel vier Spreizzonen bzw. Spreizelemente 7, 8 auf. Die Spreizzonen 7, 8 sind dabei durch Schlitze bzw, Axialschlitze 9 voneinander getrennt. Die Axialschlitze 9 stehen zweckmäßigerweise in Verbindung mit dem oben genannten inneren mittigen Hohlraum für das Befestigungselement. Die Länge der Axialschlitze 9 definiert im Ausführungsbeispiel die Länge des Spreizabschnittes 6. Vorzugsweise und im Ausführungsbeispiel sind zwei schmalere gegenüberliegende Spreizzonen 7 vorgesehen und zwei breitere gegenüberliegende Spreizzonen 8. Die Breite b der schmaleren Spreizzonen 7 ist empfohlenermaßen und im Ausführungsbeispiel deutlich geringer als die Breite b der breiteren Spreizzonen 8.

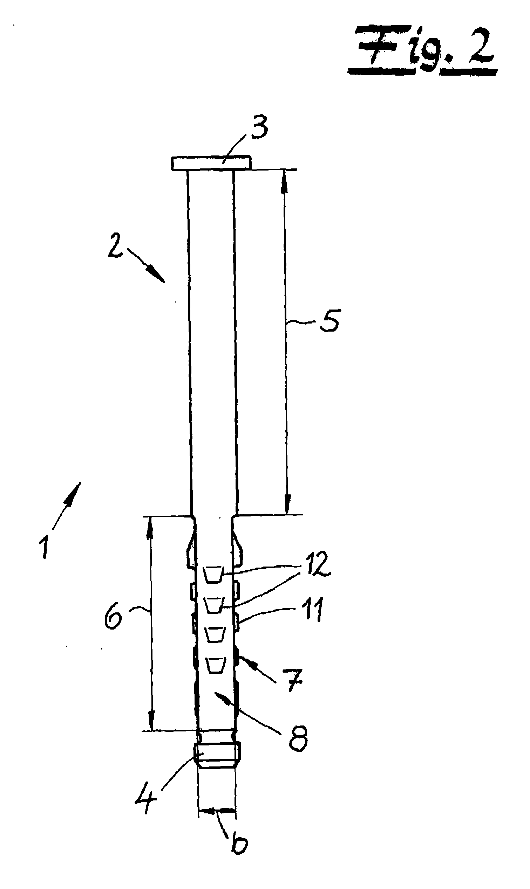

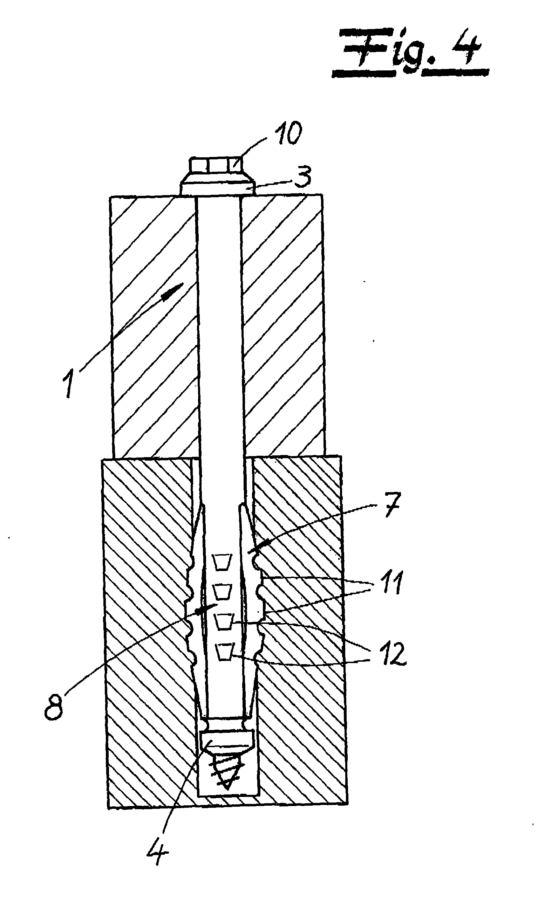

Die beiden schmaleren gegenüberliegenden Spreizzonen 7 weisen eine Mehrzahl von als Haltezähne 11 ausgebildeten Profilierungen auf, die in Längsrichtung dieser Spreizzonen 7 verteilt angeordnet sind, Diese Profilierungen bzw. Haltezähne 11 erstrecken sich bevorzugt und im Ausführungsbeispiel über die gesamte Breite b der schmaleren Spreizzonen 7. In den Fig. 2 und 4 ist erkennbar, dass auch die breiteren Spreizzonen 8 Profilierungen 12 aufweisen, die sich aber nicht über die gesamte Breite b dieser Spreizzonen 8 erstrecken. Nach bevorzugter Ausführungsform sind die Maxima und Minima der Profilierungen bzw. Haltezähne 11 der schmaleren Spreizzonen 7 ausgeprägter bzw. deutlicher ausgebildet als die Maxima und Minima der Profilierungen 12 in den breiteren Spreizzonen 8.

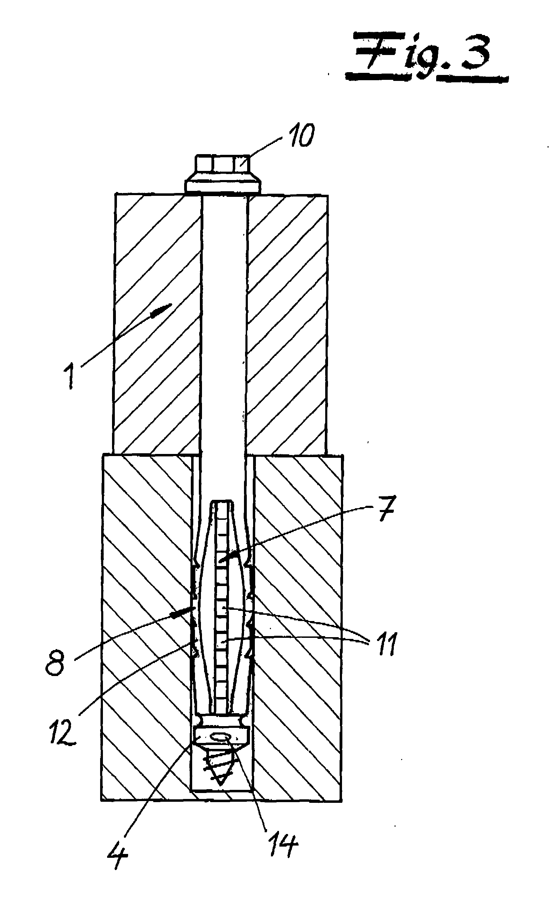

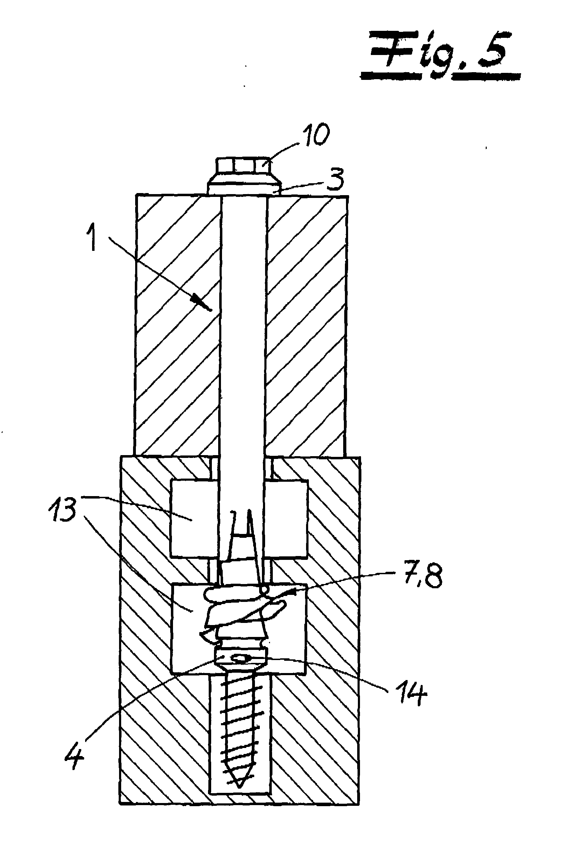

In den Fig. 3, 4 und 5 ist der erfindungsgemäße Langschaftdübel 1 im montierten Zustand mit bereits eingebrachter Schraube 90 dargestellt und zwar in unterschiedlichen Baustoffen. Fig. 3 zeigt die Seitenansicht eines Dübels 1 im montierten Zustand in einem festen Baustoff, beispielsweise Beton. Hier ist eine Spreizung der breiteren Spreizzonen 8 erkennbar. In Fig. 4 ist der erfindungsgemäße Dübel 1 im montierten Zustand in einem weichen Baustoff, beispielsweise Porenbeton dargestellt. Erkennbar ist eine Spreizung der schmaleren Spreizzonen 7. Besondere Bedeutung kommt der Fig. 5 zu, die den erfindungsgemäßen Dübel 1 im montierten Zustand in einem Hohlbaustoff, beispielsweise in einem Hohllochziegel zeigt. Aufgrund der vorhandnen Hohlräume 13 findet hier gleichsam eine Verknotung der Spreizzonen 7 und 8 statt.

Bei der Montage des Dübels in einem solchen Hohlbaustoff wird der Dübelfuß 4 im Bereich eines Hohlraums 13 in Richtung Dübelkopf 3 gezogen und die Spreizzonen 7, 8 verknoten entsprechend, was zu einem sehr festen Halt in dem Hohlbaustoff führt. Die Fig. 3 bis 5 zeigen, dass der erfindungsgemäße Langschaftdübel 1 sich in verschiedenen Baustoffen unterschiedlich verhält. Der Dübel 1 erkennt gleichsam den Baustoff und in Abhängigkeit vom Baustoff findet eine entsprechende Verformung insbesondere im Spreizabschnitt 6 statt,

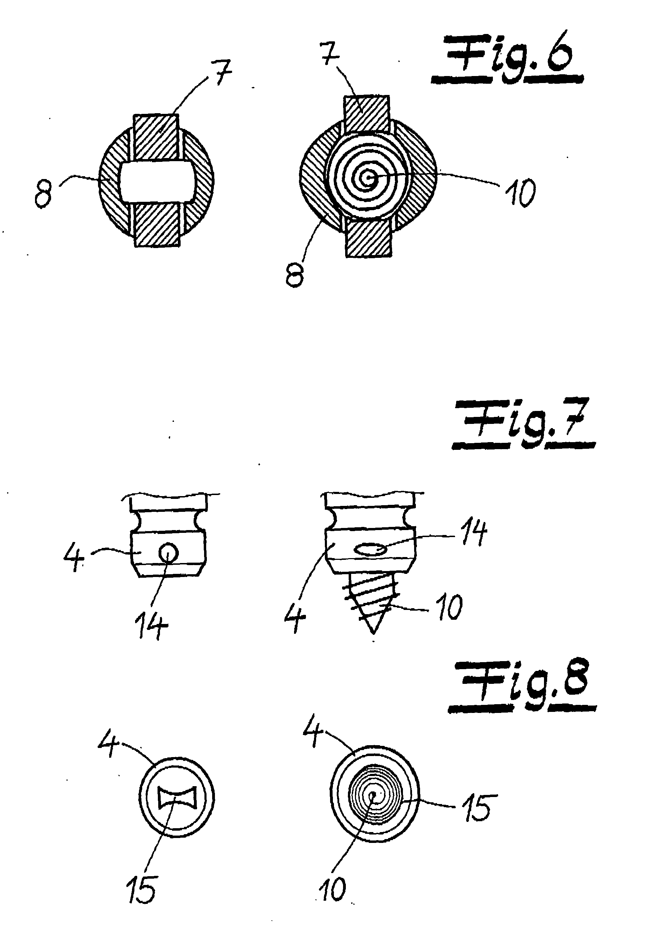

Nach bevorzugter Ausführungsform und im Ausführungsbeispiel sind zwei gegenüberliegende Spreizzonen 7 mit der Maßgabe ausgestaltet, dass sie leichter bzw. stärker abspreizbar sind als die beiden anderen gegenüberliegenden Spreizzonen 8. Im Ausführungsbeispiel sind die schmaleren Spreizzonen 7 leichter bzw. stärker von dem Basiskörpers 2 abspreizbar als die breiteren Spreizzonen 8. Fig. 6 zeigt einen Schnitt durch den Spreizabschnitt 6 im noch nicht montierten Zustand (links) und im montierten Zustand (rechts). Es ist erkennbar, dass die schmaleren Spreizzonen 7 im montierten Zustand bei eingebrachter Schraube 10 deutlich vom Basiskörper 2 abspreizen, Auch eine Abspreizung der breiteren Spreizzonen 8 ist erkennbar, die aber weniger ausgeprägt ist als die Abspreizung der Spreizzonen 7.

Die axiale Länge des Dobelfußes 4 beträgt vorzugsweise und im Ausführungsbeispiel weniger als 20 % der axialen Länge des Spreizabschnittes 6. Insbesondere in der Fig. 8 ist erkennbar, dass der Dübelfuß 4 ringförmig über den Dübelumfang umläuft. Das gilt sowohl im nicht montierten Zustand als auch im montierten Zustand. Vorzugsweise und im Ausführungsbeispiel weist der Dübelfuß 4 zwei radiale Öffnungen 14 als Dehnungselemente auf, die eine radiale Dehnung des Dübelfußes 4 bei der Montage bzw. beim Einbringen der Schraube 10 ermöglichen bzw. erleichtern. In den Figuren ist lediglich eine radiale Öffnung 14 erkennbar. Auf der gegenüberliegenden Seite des Dübels 1 ist eine nicht dargestellte zweite entsprechende radiale Öffnung 14 angeordnet, die mit der ersten radialen Öffnung 14 fluchtet. Einer vergleichenden Betrachtung der linken Seiten der Fig. 7 und 8 mit den rechten Seiten ist entnehmbar, dass der Dübelfuß 4 durch Einbringen der Schraube 10 radial gedehnt bzw. radial aufgeweitet wird. Erfindungsgemäß wird der Dübelfuß 4 bei der Montage bzw. beim Einbringen der Schraube 10 aber nicht aufgespreizt. Das bedeutet, dass der Dübelfuß 4 keine abspreizenden Elemente aufweist, die insbesondere die Ringform des Dübelfußes 4 zerstören würden. Es liegt somit im Rahmen der Erfindung, dass der Dübelfuß 4 sowohl im nicht montierten Zustand als auch im montierten Zustand nach Einbringen der Schraube 10 ringförmig ausgebildet ist und lediglich radial aufgeweitet wird.

In der Fig. 8 ist erkennbar, dass der Dübelfuß 4 eine unterseitige Öffnung 15 aufweist, die gleichsam die Verlängerung des inneren mittigen Hohlraums des Dübels 1 bildet. Vorzugsweise und im Ausführungsbeispiel ist die unterseitige Öffnung 15 im noch nicht montierten Zustand des Dübels 1 (linke Seite von Fig. 8) hantelförmig ausgebildet.

## Patentansprüche

1. Langschaftdübel mit einem Basiskörper (2), der einen Schaftabschnitt (5) und einen Spreizabschnitt (6) aufweist, wobei der Spreizabschnitt (6) mehr als zwei über den Dübelumfang verteilte Spreizzonen (7, 8) aufweist und wobei ein im Zuge der Montage des Dübels (1) nicht aufspreizender Dübelfuß (4) vorgesehen ist.

2. Langschaftdübel nach Anspruch 1, wobei der Dübel (1) aus Kunststoff besteht, vorzugsweise einstückig aus Kunststoff besteht.

3. Langschaftdübel nach einem der Ansprüche 1 oder 2, wobei die Länge des Schaftabschnittes (5) mindestens 30 %, vorzugsweise mindestens 35 %, bevorzugt mindestens 40 % der Länge des Basiskörpers (2) beträgt.

4. Langschaftdübel nach einem der Ansprüche 1 bis 3, wobei der Spreizabschnitt (6) mindestens vier Spreizzonen (7, 8) aufweist, die durch Axialschlitze (9) voneinander getrennt sind.

5. Langschaftdübel nach einem der Ansprüche 1 bis 4, wobei zumindest zwei gegenüberliegende Spreizzonen (7, 8) jeweils eine Mehrzahl von Profilierungen (11, 12) aufweisen, die in Längsrichtung der Spreizzonen (7, 8) verteilt angeordnet sind,

6. Langschaftdübel nach Anspruch 5, wobei sich die Profilierungen (11, 12) über zumindest 40 % der Breite b der Spreizzonen (7, 8) erstrecken.

7. Larigschaftdübel nach einem der Ansprüche 1 bis 6, wobei zwei schmalere gegenüberliegende Spreizzonen (7) jeweils Profilierungselemente aufweisen, die sich über die gesamte Breite b der Spreizzone (7) erstrecken.

8. Langschaftdübel nach einem der Ansprüche 1 bis 7, wobei die axiale Länge des Dübelfußes (4) weniger als 40 %, vorzugsweise weniger als 35 % und bevorzugt weniger als 30 % der axialen Länge des Spreizabschnittes (6) beträgt.

9. Langschaftdübel nach einem der Ansprüche 1 bis 8, wobei der Dilbelfuß (4) zumindest ein Dehnungselement aufweist, das eine radiale Dehnung des Dübelfußes (4) bei der Montage erleichtert.

10. Langschaftdübel nach Anspruch 9, wobei der Dübelfuß (4) zumindest eine radiale Öffnung (14) als Dehnungselement aufweist.

11. Langschaftdübel nach einem der Ansprüche 1 bis 10, wobei der Dübelfuß (4) im montierten Zustand ringförmig über den Dübelumfang umläuft und ein eingebrachtes Befestigungselement ringförmig umgibt.

12. Langschaftdübel nach einem der Ansprüche 1 bis 11, wobei der Dübelfuß (4) eine unterseitige Öffnung (15) aufweist, welche Öffnung (15) schlitzförmig und vorzugsweise hantelförmig ausgebildet ist.
